# EUROPÄISCHE PATENTSCHRIFT

(11) **EP 0 981 004 B1**
(45) Veröffentlichungstag und Bekanntmachung des Hinweises auf die Patenterteilung: **02.02.2005**
(21) Anmeldenummer: 99113918.9
(22) Anmeldetag: 16.07.1999
(51) Int. Cl.: F16L 31/02

(54) **Schlauch**
Hose
Tuyau flexible

(30) Priorität: 18.07.1998 DE 19832375
(43) Veröffentlichungstag der Anmeldung: 23.02.2000
(73) Patentinhaber: GEIGER TECHNIK GmbH, D-82467 Garmisch-Partenkirchen (DE)
(72) Erfinder: Geiger, Albert, 82467 Garmisch-Partenkirchen (DE)
(74) Vertreter: Flosdorff, Jürgen, Dr.

(56) Entgegenhaltungen:
- EP-A- 0 132 419
- DE-A- 2 230 719
- DE-U- 8 329 333
- DE-U- 8 707 246

## Beschreibung

Die Erfindung betrifft einen Schlauch, der bevorzugt aus einem gummiartigen Material besteht und beispielsweise als Kühlerschlauch in Kraftfahrzeugen verwendet wird, ohne daß die Erfindung hierauf beschränkt ist.

Wenn von einem Schlauch ein weiterer Schlauch seitlich abzweigt, wird bisher der Schlauch in zwei Schlauchstücke unterteilt, die auf zwei Schenkeln eines T-Stücks befestigt werden, auf deren drittem Schenkel der abgehende Schlauch befestigt wird. Eine derartige Anordnung ist mit einem beträchtlichen Montageaufwand verbunden.

Die DE-A- 2 230 719 offenbart einen Schlauch mit einem Abzweig, wobei der Abzweig im Bereich einer die Schlauchwandung durchbrechenden Lochung durch Vulkanisieren fest mit der Schlauchwandung verbunden ist, so daß Schlauch und Abzweigung gewissermaßen als einstückig angesehen werden können.

Der vorliegenden Erfindung liegt die Aufgabe zugrunde, für das obige Problem eine bessere Lösung zu finden.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, daß der Schlauch, der bevorzugt aus einem weichen, elastischen Polymer besteht, einstückig mit wenigstens einem seitlich abzweigenden Schlauchstutzen versehen ist. Dabei kann der Schlauch natürlich auch mit zwei oder mehr abgehenden Schlauchstutzen versehen sein, an denen jeweils ein Schlauch anbringbar ist.

Außerdem ist erfindungsgemäß vorgesehen, daß der Schlauchstutzen aus einem an dem Schlauch angeformten Schlauchansatz und einem den Schlauchansatz wenigstens teilweise umgreifenden Rohrabschnitt zusammengesetzt ist, der aus einem härteren Material als der Schlauch besteht. Als Material für den Rohrabschnitt kommt beispielsweise PA in Betracht, das mit Glasfasern verstärkt sein kann. Dieser Rohrabschnitt, der den bevorzugt aus einem weichen Polymer bestehenden Schlauchansatz umfaßt, verleiht dem Schlauchstutzen die zum Halten des anzuschließenden Abzweigschlauches erforderliche Festigkeit.

Dabei ist der Rohrabschnitt vorzugsweise Teil eines T-Rohrstücks, das außerdem den (durchgehenden) Schlauch im Abzweigbereich umgreift. Damit erhält der gesamte Abzweigbereich eine so große Festigkeit, daß der abzweigende Schlauch problemlos auf dem Schlauchstutzen befestigbar und danach darauf sicher gehalten ist.

Weiter wird vorgeschlagen, daß der Schlauch und der Schlauchansatz an das T-Rohrstück angespritzt sind. Dies läßt sich erfindungsgemäß in der Weise durchführen, daß das fertige T-Rohrstück in das Formnest der Spritzgußform eingelegt wird, in der der Schlauch mit dem seitlich abzweigenden Schlauchstutzen hergestellt wird, wobei anschließend das Formnest mit der Kunststoffschmelze des Schlauchmaterials gefüllt wird. Dabei können der Schlauch und der Schlauchansatz entweder dadurch ausgebildet werden, daß in das Formnest entsprechende, die Hohlräume ausbildende Kerne angeordnet werden, oder es kann nach dem Erstarren einer Außenschicht vorbestimmter Dicke der noch flüssige Kern im Gasinnendruckverfahren ausgeblasen werden.

Wenn -wie dies häufig erforderlich ist- der Schlauch mit einem Glasfasergewebe verstärkt werden soll, wird vor dem Einspritzen der Kunststoffschmelze ein GF-Gewebeschlauch in den den Schlauch ausbildenden Teil des Formnestes eingelegt, wobei der Schlauchansatz nicht mit Glasfasergewebe verstärkt sein muß, wenn er von dem aus hartem Material bestehenden Rohrabschnitt umgriffen wird. Im Bereich der Einmündung des Schlauchansatzes in den Schlauch muß nach Entnahme des Produktes aus der Spritzgußform die Einmündung von GF-Gewebe und eventuell dort angesammeltem Kunststoffmaterial freigeschnitten werden.

Weiter wird vorgeschlagen, daß der Schlauchansatz den freien Endbereich des Rohrabschnitts an der Außenseite umgreift. Der Rohrabschnitt hat hierzu bevorzugt etwa auf halber Länge eine verringerte Wandstärke mit kleinerem Außendurchmesser, wodurch die Kunststoffschmelze im Formnest um den freien Endabschnitt des Rohrabschnitt herumfließen kann. Hierdurch wird eine besonders sichere Verbindung der beiden Bestandteile des Schlauchstutzens geschaffen, und das weiche, bevorzugt gummiartige Schlauchmaterial sorgt für eine gute Abdichtung gegenüber dem aufgesetzten, abgehenden Schlauch oder einem auf dem Schlauchstutzen zu befestigenden Kupplungsstück.

Wenn der abgehende Schlauch mittels einer Schnellkupplung an dem Schlauchstutzen befestigt werden soll, was im Rahmen der Erfindung liegt, enthält der Rohrabschnitt des Schlauchstutzens Befestigungsmittel für das Kupplungsstück, in das bevorzugt ein Rohrstutzen des anzuschließenden Schlauches eingreift. Die Befestigungsmittel an dem Rohrabschnitt können beispielsweise nach außen ragende Vorsprünge sein, die -mit schrägen Rampen versehen- in Fenster des aufgeschobenen Kupplungsstücks einrasten. Der Rohrabschnitt kann auch eine umlaufende Nut haben, in die hakenförmige Vorsprünge eines Kupplungsstücks einrasten, die beispielsweise an Federarmen des Kupplungsstücks angeformt sind. Das Kupplungsstück kann seinerseits mit zwei seine Umfangswand durchgreifenden Schlitze versehen sein, durch die zwei Schenkel eines Metallbügels ins Innere ragen, die beim Einführen des anzuschließenden Rohrstutzens elastisch nach außen gedrückt und -in der Kopplungsposition- in eine Umfangsnut des Rohrstutzens einrasten.

Bei einer derartigen Ausgestaltung der Erfindung entfällt praktischer jeglicher Montageaufwand bei der Anordnung eines Schlauches, von dem ein (oder mehrere) Schlauch abgeht.

Die Erfindung wird nachfolgend mit Bezug auf die beigefügte Zeichnung näher beschrieben.

Dabei zeigen:
- Fig. 1: eine erste Ausführungsform des erfindungsgemäßen Schlauchs in einem Längsschnitt;
- Fig. 2: eine Aufsicht auf den Schlauch gemäß Fig. 1;
- Fig. 3: eine vergrößerte Darstellung des Abzweigbereichs des Schlauchs gemäß Fig. 1;
- Fig. 4: eine zweite Ausführungsform des erfindungsgemäßen Schlauchs in einem Längsschnitt;
- Fig. 5: eine Aufsicht auf den Schlauch gemäß Fig. 4 und
- Fig. 6: eine vergrößerte Darstellung des Abzweigbereichs des Schlauchs gemäß Fig. 4.

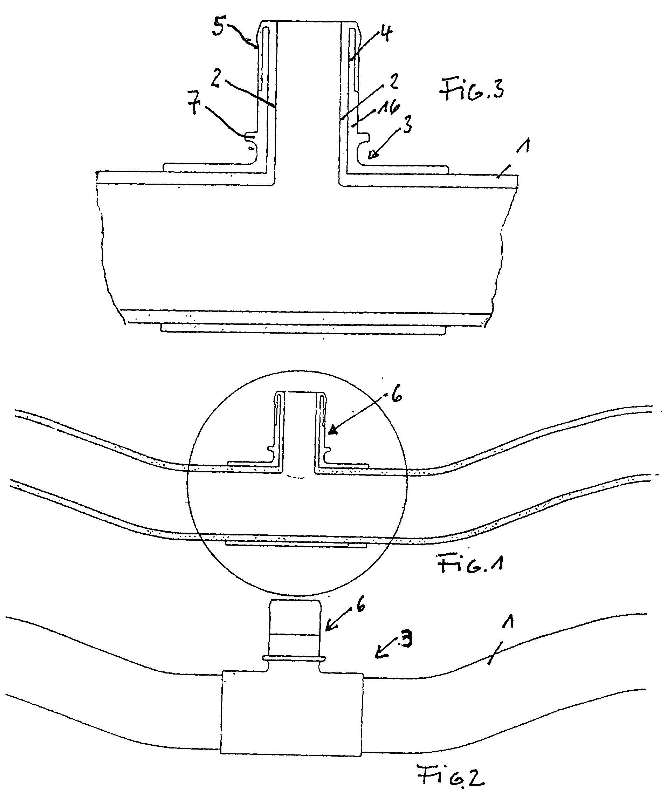

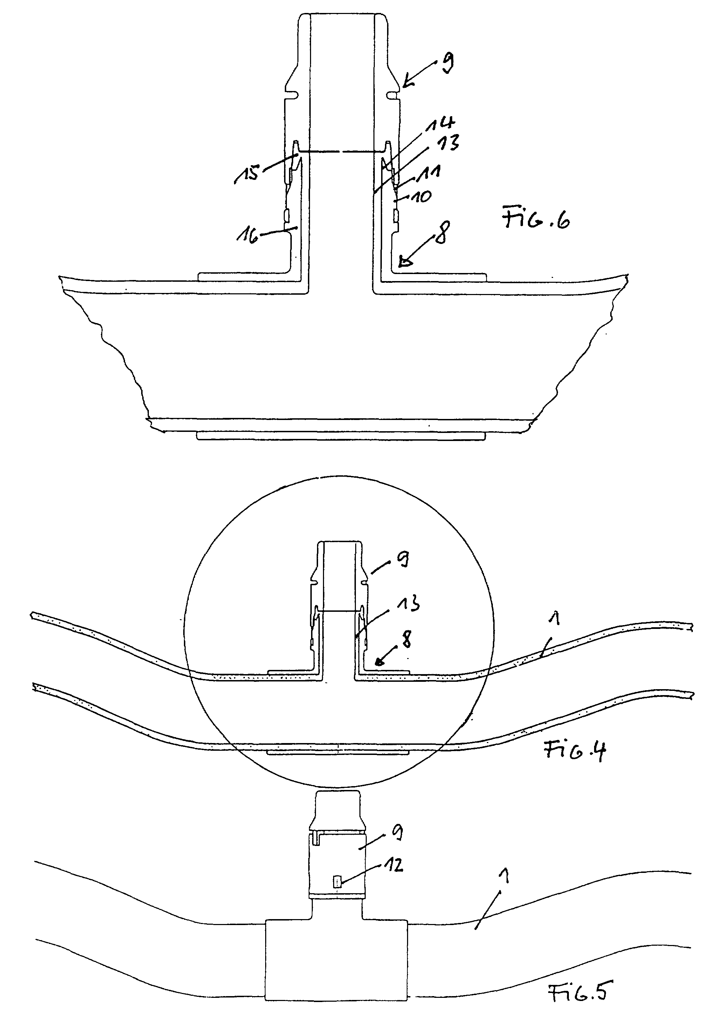

Es wird zunächst auf die Figuren 1 bis 3 Bezug genommen. An dem Schlauch 1, der bevorzugt aus einem weichen, elastischen Polymer besteht und eventuell ein GF-Gewebe oder beigemischte Glasfasern enthält, ist ein Schlauchansatz 2 einstückig angeformt. In dem in Fig. 3 vergrößert dargestellten Abzweigbereich sind der eigentliche Schlauch 1 sowie der Schlauchansatz 2 von einem Rohrabschnitt 16 eines T-Rohrstücks 3 umgeben, das aus einem harten Kunststoff wie PA 6.6 besteht, das durch Glasfaser verstärkt sein kann. Das T-Rohrstück 3 hat an seinem freien Endbereich 4 eine verringerte Wandstärke mit reduziertem Außendurchmesser, so daß in der Spritzgußform Kunststoffschmelze zur Außenseite des Endabschnitts 4 gelangt und diesen mit einem vorderen Ringabschnitt 5 umfaßt. Hierdurch ist eine dauerhaft feste Verbindung zwischen dem Schlauchansatz 2 und dem T-Rohrstück 3 geschaffen.

An der Außenseite des insgesamt mit dem Bezugszeichen 6 versehenen Rohrstutzens ist ein ringförmiger Vorsprung 7 angeformt, der als Anschlag für einen auf den Rohrstutzen 6 aufzusetzenden Schlauch (nicht dargestellt) dient, der beispielsweise mittels einer Schlauchschelle befestigt wird.

Bei der in den Figuren 4 bis 6 dargestellten zweiten Ausführungsform des erfindungsgemäßen Schlauchs ist das T-Rohrstück 8 mit Mitteln versehen, mit denen ein Kupplungsstück 9 einer Schnellkupplung befestigbar ist. An der Außenseite des T-Rohrstücks 8 sind in Umfangsrichtung gleichmäßig beabstandet vier Vorsprünge 10 mit schrägen Rampen 11 angeformt, die nach dem Aufschieben des Kupplungsstücks 9 in entsprechende Fenster 12 des Kupplungsstücks 9 einrasten. In das Kupplungsstück 9 kann beispielsweise ein weiterer (nicht dargestellter) Schlauchstutzen eingeführt werden, der z.B. mit einem Federbügel in dem Kupplungsstück 9 verriegelbar ist.

Auch bei der zweiten Ausführungsform umgreift das Kunststoffmaterial des Schlauchansatzes 13 den freien Endabschnitt 14 des T-Rohrstücks 8 radial außen (Bezugszeichen 15), wodurch ein flüssigkeitsdichter Anschluß des Kupplungsstücks 9 ohne die Anordnung eines zusätzlichen O-Rings erreicht wird.

## Patentansprüche

1. Schlauch, der einstückig mit wenigstens einem seitlich abzweigenden Schlauchstutzen (6) versehen ist,
**dadurch gekennzeichnet,**
**daß** der Schlauchstutzen (6) aus einem an dem Schlauch (1) angeformten Schlauchansatz (2,13) und einem den Schlauchansatz (2,13) wenigstens teilweise umgreifenden Rohrabschnitt (16) zusammengesetzt ist, der aus einem härteren Material als der Schlauch (1) besteht.

2. Schlauch nach Anspruch 1,
**dadurch gekennzeichnet, daß** der Rohrabschnitt (16) Teil eines T-Rohrstücks (3, 8) ist, das außerdem den Schlauch (1) im Abzweigbereich umgreift.

3. Schlauch nach Anspruch 2,
**dadurch gekennzeichnet, daß** der Schlauch (1) und der Schlauchansatz (2, 13) an das T-Rohrstück (3, 8) angespritzt sind.

4. Schlauch nach Anspruch 3,
**dadurch gekennzeichnet, daß** der Schlauchansatz (2, 13) den freien Endbereich (4, 14) des Rohrabschnitts (16) an der Außenseite umgreift.

5. Schlauch nach einem der Ansprüche 1 bis 4,
**dadurch gekennzeichnet, daß** der Schlauch (1), jedoch nicht der Schlauchansatz (2, 13) mit GF-Gewebe verstärkt ist.

6. Schlauch nach einem der Ansprüche 1 bis 5,
**dadurch gekennzeichnet, daß** der Rohrabschnitt (16) mit Befestigungsmitteln (10) für ein Kupplungsstück (9) versehen ist, in dem ein anschließender Rohrstutzen fixierbar ist.

## Claims

1. A hose which is integrally provided with at least one laterally branched-off hose nozzle (6),
**characterized in**
**that** the hose nozzle (6) is composed of a hose attachment (2, 13) molded onto the hose (1) and of a tube section (16) gripping around the hose attachment (2, 13) at least in part, which consists of a harder material than the hose (1).

2. The hose according to claim 1,
**characterized in that** the tube section (16) is part of a T-piece (3, 8) which also grips around the hose (1) in the branch area.

3. The hose according to claim 2,
**characterized in that** the hose (1) and the hose attachment (2) are injection-molded onto the T-piece (3, 8).

4. The hose according to claim 3,
**characterized in that** the hose attachment (2, 13) grips around the free end portion (4, 14) of the tube section (16) on the outside.

5. The hose according to any one of claims 1 to 4,
**characterized in that** the hose (1), but not the hose attachment (2, 13), is reinforced with GF tissue.

6. The hose according to any one of claims 1 to 5,
**characterized in that** the tube section (16) is provided with fastening means (10) for a coupling member (9) in which an adjoining tube nozzle can be fixed.

## Revendications

1. Tuyau souple, qui est pourvu en une pièce d'au moins une tubulure (6) partant latéralement, **caractérisé en ce que** la tubulure (6) est constituée d'un raccord de tuyau (2,13),rapporté par formage au tuyau (1) et d'un tronçon tubulaire (16) entourant le raccord de tuyau (2,13) au moins partiellement, qui est constitué d'un matériau plus dur que le tuyau (1).

2. Tuyau selon la revendication 1, **caractérisé en ce que** le tronçon tubulaire (16) fait partie d'une pièce tubulaire (3,8) en T qui entoure de plus le tuyau (1) dans la zone de branchement.

3. Tuyau selon la revendication 2, **caractérisé en ce que** le tuyau (1) et le raccord de tuyau (2,13) sont moulés par injection sur la pièce tubulaire en T (3,8).

4. Tuyau selon la revendication 3, **caractérisé en ce que** le raccord de tuyau (2,13) entoure la zone d'extrémité libre (4,14) du tronçon tubulaire (16) au côté extérieur.

5. Tuyau selon l'une des revendications 1 à 4, **caractérisé en ce que** le tuyau (1), mais non pas le raccord de tuyau (2,13), est renforcé par un tissu en fibres de verre.

6. Tuyau selon l'une des revendications 1 à 5, **caractérisé en ce que** le tronçon tubulaire (16) est pourvu de moyens de fixation (10) pour une pièce de couplage (9) dans laquelle peut être fixée une tubulure suivante.
